# FASCICULE DE BREVET EUROPEEN

(11) **EP 1 405 466 B1**
(45) Date de publication et mention de la délivrance du brevet: **14.05.2008**
(21) Numéro de dépôt: 02762512.8
(22) Date de dépôt: 02.07.2002
(51) Int. Cl.: H04L 12/413, H04L 12/12

(54) **SYSTEME DE REVEIL DE STATIONS ASSOCIEES POUR LA MISE EN OEUVRE D'AU MOINS UNE FONCTION REPARTIE, NOTAMMENT DANS UN VEHICULE AUTOMOBILE**
AUFWECKSYSTEM FÜR VEREINIGTE STATIONEN ZUR DURCHFÜHRUNG MINDESTENS EINER VERTEILTEN FUNKTION, INSBESONDER IN EINEM FAHRZEUG
WAKE-UP SYSTEM FOR STATIONS ASSOCIATED FOR IMPLEMENTING AT LEAST A DISTRIBUTED FUNCTION, IN PARTICULAR IN A MOTOR VEHICLE

(30) Priorité: 06.07.2001 FR 0109034
(43) Date de publication de la demande: 07.04.2004
(73) Titulaire: Peugeot Citroën Automobiles S.A., 78140 Vélizy Villacoublay (FR)
(72) Inventeur: MARAIS, Jean-Michel, F-92000 Nanterre (FR); HENRI, Nicolas, F-75016 Paris (FR); HILDENBRAND, Yannick, F-78400 Verneuil sur Seine (FR); JOFFRAIN, Lionel, F-75015 Paris (FR)
(74) Mandataire: Habasque, Etienne J. Jean-François
(86) Numéro de dépôt international: PCT/FR2002/002309
(87) Numéro de publication internationale: WO 2003/005215

(56) Documents cités:
- EP-A- 1 050 998
- US-A- 5 940 366

## Description

La présente invention concerne un système de réveil de stations.

Plus particulièrement, l'invention se rapporte à un tel système de réveil de stations associées pour la mise en oeuvre d'au moins une fonction répartie et raccordées par un réseau de transmission d'informations notamment pour véhicule automobile, dans lequel les stations doivent passer d'un état de veille ou d'arrêt à un état de réveil pour échanger des informations relatives à la fonction répartie.

Pour un exemple de réalisation d'un tel système, on pourra se reporter au document US-A-5 940 366. Cependant le système décrit dans ce document présente un certain nombre d'inconvénients notamment au niveau de l'encombrement du bus de données.

Il existe également dans l'état de la technique, des systèmes de réveil de ce type dans lesquels on utilise une ligne de transmission d'un signal de réveil par fonction répartie qui s'étend entre une station et une ou plusieurs autres stations associées pour la mise en oeuvre de cette fonction.

On conçoit alors que chaque fonction répartie nécessite la mise en oeuvre d'une ligne de transmission du signal de réveil correspondant entre les différentes stations associées et que ces lignes sont développées en fonction des besoins spécifiques au cas par cas.

La diversité des systèmes et des fonctions, fait que ces lignes de transmission sont toutes différentes et que celles-ci supportent des protocoles différents, alors que le besoin est identique, à savoir réveiller à distance une ou plusieurs stations distantes.

Par conséquent, les interfaces matérielles et logicielles implantées dans les stations sont également différentes.

Cela a pour effet de multiplier le nombre d'interfaces d'entrée/sortie sur une station, si celle-ci est impliquée dans plusieurs fonctions réparties avec des stations différentes.

On a également proposé dans l'état de la technique, des systèmes de réveil utilisant les réseaux de transmission d'informations du type par exemple CAN, etc...

Cependant, ces structures présentent également un certain nombre d'inconvénients.

En effet, le réveil d'une station par un tel réseau de transmission d'informations s'effectue dès qu'un message est détecté sur le réseau par les gestionnaires de protocole associés aux stations.

N'importe quel message déclenche donc le processus de réveil de toutes les stations.

Deux stations assurant une fonction répartie utilisant le réseau pour échanger des informations, toutes les stations sont réveillées sans cesse dès qu'un message transite sur ce réseau, ce qui n'est pas acceptable notamment en terme de consommation d'énergie électrique.

Le but de l'invention est donc de résoudre ces problèmes.

A cet effet, l'invention a pour objet un système de réveil de stations associées pour la mise en oeuvre d'au moins une fonction répartie et raccordées par un réseau de transmission d'informations notamment pour véhicule automobile, dans lequel les stations doivent passer d'un état de veille ou d'arrêt à un état de réveil pour échanger des informations relatives à la fonction répartie, caractérisé en ce que toutes les stations sont raccordées par une ligne unique de transmission d'un signal de réveil de station, en ce qu'au moins certaines de ces stations comprennent des moyens de génération d'un signal de réveil sur cette ligne, pour faire passer les autres stations dans leur état de réveil et des moyens d'émission d'informations relatives à la fonction répartie, sur le réseau de transmission d'informations, et en ce qu'au moins certaines de ces stations comprennent des moyens d'analyse de ces informations sur le réseau de transmission d'informations pour déterminer si elles sont concernées par celles-ci et donc par la fonction répartie correspondante, afin de rester en état de réveil ou repasser en état de veille ou d'arrêt si ce n'est pas le cas.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système de réveil de l'état de la technique ;
- la Fig.2 représente un schéma synoptique illustrant la structure d'un système selon l'invention ; et
- la Fig.3 représente un schéma électrique illustrant un exemple de réalisation d'une interface de ligne de réveil.

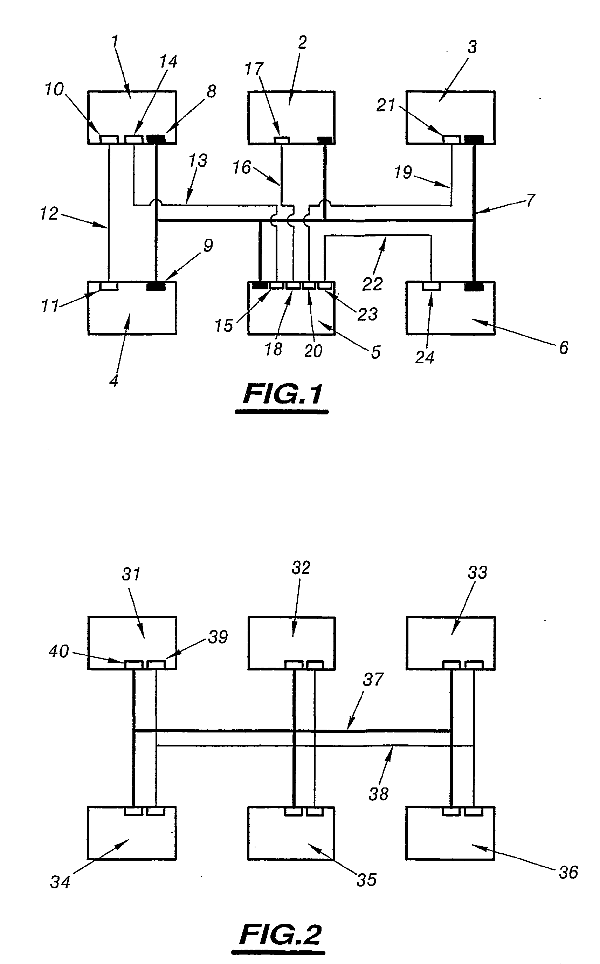

On a en effet représenté sur la figure 1, un système électronique embarqué à bord d'un véhicule automobile par exemple.

Celui-ci comporte plusieurs stations, dont six désignées par les références générales 1,2,3,4,5 et 6, sont représentées sur cette figure.

Ces différentes stations sont par exemple associées à différentes fonctions embarquées à bord du véhicule, telles que par exemple des fonctions réparties.

Ces différentes stations sont également raccordées entre elles par un réseau de transmission d'informations désigné par exemple par la référence générale 7, à travers des interfaces comme par exemple les interfaces 8 et 9 des stations 1 et 4.

Ce réseau peut par exemple être du type CAN, D2B, TTP, SI, etc...

Ces stations peuvent passer d'un état de veille ou d'arrêt à un état de réveil pour échanger des informations relatives notamment aux fonctions réparties.

Comme cela a été indiqué précédemment, chaque fonction répartie nécessite la mise en oeuvre d'une ligne de transmission d'un signal de réveil correspondant entre les stations associées pour la mise en oeuvre de cette fonction.

C'est ainsi que l'on peut constater sur cette figure 1, que les stations 1 et 4 sont associées pour la mise en oeuvre d'une fonction, ce qui nécessite donc l'implantation dans ces stations, d'interfaces d'entrée/sortie respectivement 10 et 11, entre lesquelles s'étend une ligne de transmission d'un signal de réveil désignée par la référence générale 12.

Une fonction répartie est également mise en oeuvre par les stations 1 et 5.

Une ligne de transmission-de signal de réveil correspondant désignée par la référence générale 13 s'étend alors entre ces deux stations, et plus particulièrement entre des interfaces d'entrée/sortie désignées par les références générales respectives 14 et 15, de celles-ci.

La station 5 est également associée à la station 2 pour la mise en oeuvre d'une fonction répartie.

La ligne de transmission du signal de réveil correspondant est désignée par la référence générale 16 et s'étend entre des interfaces d'éntrée/sortie 17 et 18 respectivement.

La station 5 est également associée à la station 3 pour la mise en oeuvre d'une fonction répartie et la ligne de transmission du signal de réveil correspondant est désignée par la référence générale 19 et s'étend entre des interfaces d'entrée/sortie 20 et 21 respectivement, de ces stations.

Enfin, la station 5 est également associée à la station 6 pour la mise en oeuvre d'une fonction répartie et la ligne de transmission du signal de réveil est désignée par la référence générale 22 et s'étend entre des interfaces d'entrée/sortie 23 et 24 respectivement de ces stations.

On conçoit à la lumière de cette figure, que de tels systèmes présentent un certain nombre d'inconvénients.

Pour résoudre les problèmes mentionnés précédemment, et selon l'invention, toutes les stations sont raccordées par une ligne unique de transmission d'un signal de réveil des stations.

Ceci est illustré sur la figure 2, qui représente un schéma synoptique illustrant la structure d'un système selon l'invention.

On reconnaît en effet sur cette figure 2, un système électronique embarqué à bord d'un véhicule automobile par exemple, qui comporte plusieurs stations dont six sont représentées et désignées par les références générales 31,32,33,34,35 et 36. Ces différentes stations sont raccordées entre elles par un réseau de transmission d'informations désigné par la référence générale 37, formé par exemple un réseau de type CAN, D2B, TTP, SI, etc..

La ligne unique de transmission du signal de réveil des stations, est quant à elle désignée par la référence générale 38.

Comme cela sera décrit plus en détail par la suite, au moins certaines de ces stations comprennent des moyens de génération d'un signal de réveil sur cette ligne pour faire passer les autres stations dans leur état de réveil et des moyens d'émission d'informations relatives à la fonction répartie sur le réseau de transmission d'informations.

Ces différents moyens sont par exemple formés par des interfaces de ligne et de réseau désignées par les références générales 39 et 40 respectivement pour la station désignée par la référence générale 31.

Au moins certains de ces stations comprennent également des moyens d'analyse de ces informations sur le réseau de transmission d'informations pour déterminer si elles sont concernées par celles-ci et donc par la fonction répartie correspondante, afin de rester en état de réveil ou repasser en état de veille ou d'arrêt si ce n'est pas le cas.

Ces moyens d'analyse sont également formés par les moyens portant la référence 40 sur la figure 2.

On conçoit alors que grâce à une telle structure, lorsqu'une station souhaite en réveiller une autre pour mettre en oeuvre une fonction répartie, elle émet un signal de réveil sur la ligne unique 38 pour faire passer toutes les autres stations de leur état de veille ou d'arrêt dans leur état de réveil.

Cette station émet également sur le réseau de transmission d'informations 37, des informations relatives à cette fonction répartie.

Toutes les autres stations, une fois réveillées, analysent ces informations sur le réseau de transmission d'informations pour leur permettre de déterminer si elles sont concernées par celles-ci et donc par la fonction répartie correspondante, afin de rester dans un état de réveil et éventuellement échanger des informations avec la station ayant déclenché le réveil des autres stations, ou repasser dans leur état de veille ou d'arrêt si elles ne sont pas concernées par cette fonction.

Cette séquence peut par exemple se répéter à chaque fois qu'une station demande l'exécution d'une ou de plusieurs fonctions réparties, alors que les autres stations sont en état de veille ou d'arrêt.

Le signal de réveil peut par exemple se présenter sous la forme d'une impulsion électrique d'une durée prédéterminée transmise sur la ligne 38.

La durée de l'impulsion électrique transmise est calibrée en fonction des différents systèmes connectés sur la ligne de réveil et cette impulsion pilote l'entrée de l'étage d'alimentation des stations et doit donc être assez longue pour permettre à toutes ces stations de démarrer, de s'initialiser puis de s'auto-alimenter si nécessaire.

En effet, la ligne de transmission du signal de réveil véhicule seulement un signal de commande.

Les stations disposent alors de moyens d'alimentation de puissance fournissant l'énergie électrique nécessaire à leur bon fonctionnement.

Ces moyens d'alimentation comprennent alors par exemple un mécanisme d'auto-maintien piloté de façon logicielle, pour assurer que la station concernée restera bien en état de réveil si elle est concernée par la fonction répartie.

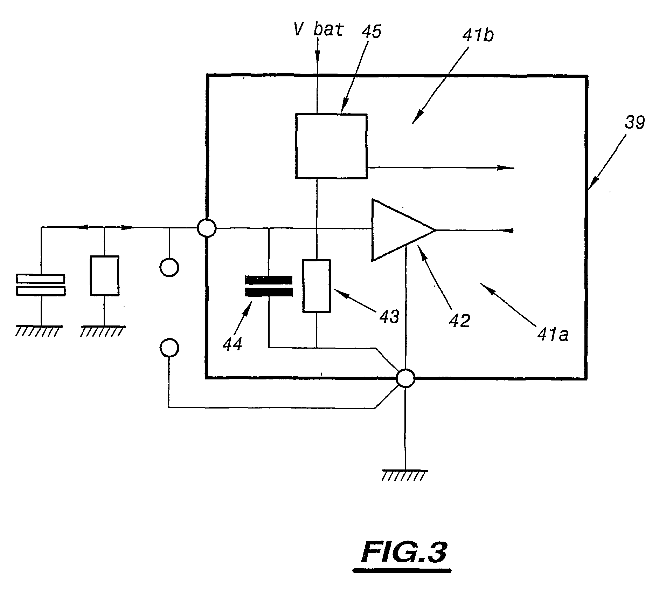

On a représenté sur la figure 3, une interface de ligne de réveil désignée par la référence 39.

Sur cette figure, on a représenté une interface complète permettant à la station correspondante de recevoir un signal de réveil et d'en émettre un par l'intermédiaire de deux étages complémentaires.

Sur cette figure 3, l'étage d'entrée est désigné par la référence générale 41 a et l'étage de sortie est désigné par la référence générale 41 b.

Il va de soi bien entendu que des stations équipées de l'un seulement de ces étages peuvent également être envisagées selon les besoins spécifiques à cette station.

L'étage d'entrée du signal de réveil comporte un tampon d'entrée désigné par la référence générale 42 associé à une résistance 43 en parallèle avec un condensateur 44 qui constitue donc une entrée active à l'état haut.

Lorsque l'entrée est active, la demande de réveil est mise en forme et déclenche le démarrage de la station correspondante.

L'étage de sortie 41 b comporte quant à lui un commutateur à semi-conducteur désigné par la référence générale 45, représenté sous la forme d'un bloc et qui permet de répercuter une demande de réveil vers toutes les autres stations raccordées à la ligne de réveil.

Cet exemple décrit donc l'utilisation d'un étage bidirectionnel formant à la fois entrée et sortie de signal.

Toutes les stations peuvent comporter une interface de ligne comprenant un étage d'entrée de signal incluant un tampon d'entrée alors qu'un étage de sortie incluant un organe commutateur à semi-conducteur peut être prévu dans au moins certaines des stations.

On conçoit alors que cette structure présente un certain nombre d'avantages dans la mesure où l'on n'utilise qu'une ligne unique de transmission du signal de réveil entre les stations quel que soit le nombre de fonctions réparties à activer lorsque les stations sont en état de veille ou d'arrêt par exemple, ce qui se traduit par des gains en termes d'architecture électrique et de faisceaux.

Une telle interface de réveil standard peut également être mise en oeuvre facilement et largement, car l'étage matériel utilisé est très proche de ceux déjà existants dans les stations. Seule une gestion logicielle spécifique doit être créée au sein de chaque station, ce qui se traduit par des gains en termes d'industrialisation et de standardisation.

Une telle structure permet donc de conserver les avantages des solutions antérieures, à savoir :
- activations multiples possibles, c'est-à-dire qu'une ou plusieurs fonctions réparties peuvent être exécutées sans que toutes les stations soient actives, car les stations non concernées par la ou les fonctions réparties après une phase de réveil, repassent en état de veille ou d'arrêt, tandis que les autres stations restent en état de réveil pour mettre en oeuvre celles-ci ; et
- consommation d'énergie électrique optimisée, car seules les stations impliquées dans les fonctions réparties demandées sont actives, alors que les autres sont en état de veille ou d'arrêt.

Comme cela a été indiqué précédemment, le système selon l'invention s'applique aussi bien à des stations en état de veille qu'en état d'arrêt.

On entend par station en état d'arrêt, une station fonctionnellement inactive et dont la consommation d'énergie est nulle.

Par station en état de veille, on entend une station fonctionnellement inactive mais dont la consommation est restée minimale afin d'assurer l'alimentation de certains périphériques, qui en veille, sont indépendants du coeur numérique de celle-ci, le coeur numérique pouvant par exemple être un processeur, un microprocesseur ou un micro-contrôleur.

A titre d'exemple, une horloge peut constituer l'un de ces périphériques.

Bien entendu, différents modes de réalisation de ce système peuvent être envisagés.

Ainsi par exemple, le commutateur à semi-conducteur peut être formé par un organe de type MOSFET, mais tout autre type de commutateur à semi-conducteur, tel que par exemple un transistor bipolaire, peut également être utilisé.

## Revendications

1. Système de réveil comprenant des stations associées pour la mise en oeuvre d'au moins une fonction répartie et raccordées par un réseau (37) de transmission d'informations notamment pour véhicule automobile, dans lequel les stations (31,32,33,34,35,36) doivent passer d'un état de veille ou d'arrêt à un état de réveil pour échanger des informations relatives à la fonction répartie, **caractérisé en ce que** toutes les stations sont raccordées par une ligne unique (38) de transmission d'un signal de réveil de station, **en ce qu'**au moins certaines de ces stations comprennent des moyens (39) de génération d'un signal de réveil sur cette ligne (38), pour faire passer les autres stations dans leur état de réveil et des moyens (40) d'émission d'informations relatives à la fonction répartie, sur le réseau (37) de transmission d'informations, et **en ce qu'**au moins certaines de ces stations comprennent des moyens (40) d'analyse de ces informations sur le réseau de transmission d'informations, pour déterminer si elles sont concernées par celles-ci et donc par la fonction répartie correspondante, afin de rester en état de réveil ou repasser en état de veille ou d'arrêt si ce n'est pas le cas.

2. Système selon la revendication 1, **caractérisé en ce que** le signal de réveil se présente sous la forme d'une impulsion électrique de durée prédéterminée nécessaire aux stations pour s'alimenter et s'initialiser, sous sa commande.

3. Système selon la revendication 2, **caractérisé en ce que** les stations comprennent des moyens d'alimentation en énergie électrique comportant un mécanisme d'auto-maintien permettant le maintien de celles-ci en état de réveil, si elles sont concernées par la fonction répartie.

4. Système selon l'une quelconque des revendications précédentes, **caractérisé en ce que** toutes les stations comprennent une interface de ligne (39), comprenant un étage d'entrée de signal (41 a) incluant un tampon d'entrée (42) et **en ce qu'**au moins certaines stations comprennent un étage de sortie (41 b), incluant un organe commutateur à semi-conducteur (45).

## Claims

1. Wake-up system comprising stations which are associated for implementing at least one allocated function and which are connected by means of a data transmission network (37), in particular for a motor vehicle, wherein the stations (31, 32, 33, 34, 35, 36) must move from a standby or idle state to an alert state in order to exchange data relating to the allocated function, **characterised in that** all of the stations are connected by means of a single line (38) for transmitting a station wake-up signal, and **in that** at least some of these stations comprise means (39) for generating a wake-up signal on this line (38) in order to cause the other stations to move into their alert state and means (40) for transmitting data relating to the allocated function, on the data transmission network (37), and **in that** at least some of these stations comprise means (40) for analysing these data on the data transmission network in order to determine whether the data and therefore the corresponding allocated function is/are relevant to the stations, in order to remain in an alert state or move into a standby or idle state if this is not the case.

2. System according to claim 1, **characterised in that** the wake-up signal is in the form of an electrical pulse of a predetermined length required by the stations in order to be supplied with electrical energy and initialised under the control thereof.

3. System according to claim 2, **characterised in that** the stations comprise electrical energy supply means which comprise a self maintaining mechanism which allows them to be maintained in an alert state if the allocated function relates to them.

4. System according to any one of the preceding claims, **characterised in that** all the stations comprise a line interface (39) which comprises a signal input stage (41a) which comprises an input buffer (42) and **in that** at least some of the stations comprise an output stage (41b) which comprises a semi-conductor switching member (45).

## Patentansprüche

1. Aufwecksystem, das Stationen aufweist, die für das Durchführen von mindestens einer verteilten Funktion miteinander verbunden sind, und die durch ein Netz (37) zur Übertragung von Informationen insbesondere für ein Kraftfahrzeug miteinander verbunden sind, wobei die Stationen (31, 32, 33, 34, 35, 36) zum Austauschen von Informationen in Bezug auf die verteilte Funktion von einem Bereitschaftszustand oder einem abgeschalteten Zustand in einen aufgeweckten Zustand übergehen müssen, **dadurch gekennzeichnet, dass** alle Stationen durch eine einzige Leitung (38) zur Übertragung eines Stations-Aufweck-Signals miteinander verbunden sind, dass mindestens einige der Stationen aufweisen: Mittel (39) zur Generierung eines Aufwecksignals auf dieser Leitung (38), damit die anderen Stationen in ihren aufgeweckten Zustand gebracht werden, und Mittel (40) zum Aussenden von Informationen in Bezug auf die verteilte Funktion über das Netz (37) zur Übertragung von Informationen, und **dadurch**, dass zumindest einige der Stationen Mittel (40) zur Analyse der Informationen in dem Informations-Übertragungs-Netz aufweisen, um zu ermitteln, ob sie von diesen und somit von der entsprechenden verteilten Funktion betroffen sind, damit sie in dem aufgeweckten Zustand bleiben oder, wenn dies nicht der Fall ist, erneut in den Bereitschaftszustand oder in den ausgeschalteten Zustand übergehen.

2. System gemäß Anspruch 1, **dadurch gekennzeichnet, dass** das Aufweck-Signal die Form eines elektrischen Impulses einer vorbestimmten Dauer aufweist, die notwendig ist, damit die Stationen unter seinem Befehl versorgt und initialisiert werden.

3. System gemäß Anspruch 2, **dadurch gekennzeichnet, dass** die Stationen Mittel zur Versorgung mit elektrischer Energie aufweisen, die einen Selbsthaltungs-Mechanismus aufweisen, der das Halten derselben im aufgeweckten Zustand erlaubt, wenn sie von der verteilten Funktion betroffen sind.

4. System gemäß einem der vorherigen Ansprüche, **dadurch gekennzeichnet, dass** alle Stationen eine Leitungsschnittstelle (39) aufweisen, die eine Signal-Eingangsstufe (41a) aufweist, die einen Eingabepuffer (42) aufweist, und dass mindestens einige Stationen eine Ausgangsstufe (41b) aufweisen, die ein Halbleiter-Schalt-Bauteil (45) aufweist.
